# EUROPEAN PATENT APPLICATION

(11) **EP 1 604 814 A1**
(43) Date of publication of application: **14.12.2005**
(21) Application number: 04013693.9
(22) Date of filing: 10.06.2004
(51) Int. Cl.: B32B 15/08, B41M 7/00, A63C 5/12, A63C 5/03

(54) **Decoration of a multi-layered device, especially a (winter) sports apparatus**

(71) Applicant: IMS KUNSTSTOFF AG, 3076 Worb (CH)
(72) Inventor: Breukers, Zef, 6136 GM Sittard (NL)
(74) Representative: Hepp, Dieter

(57) **Abstract**

The claimed process is related to the application of a decoration to a device, especially a winter sports apparatus, wherein the decoration comprises an especially ink-jetted decoration layer. The decoration according to the invention allows for achieving a remarkably improved bonding to adjacent layers.

## Description

The invention is related to a process of applying a decoration to an especially area-measured device, especially a (winter) sports apparatus, possessing a multi-layered structure, devices and semi-finished sheet products obtainable by said process and the use of crosslinkable, preferably irradiation curable color agents within said purpose.

A winter sports apparatus such as e.g. skis and snowboards possess a core structure, commonly made from wood or synthetic material such as urethane foam. A ski further possesses a reinforcing, upper layer ("Obergurt"), made from synthetic fibers such as e.g. glass, carbon or aramids, typically connected to the core structure by e.g. an epoxy resin. As next-outer layer, a plastic protective layer is currently always provided, usually referred to as top surface. On the backside of the transparent protective layer, decorations such as text, images or the like are applied. The protective layer is applied in order to provide abrasion- and impact resistance, and needs to withstand dynamic load and temperature conditions which are common in outdoor use. Typically, additional lacquers or varnishes are applied for increased scratch and UV resistance and control of glossy or matt surface appearance.

For the decoration of especially area-measured devices such as the above-mentioned winter sports apparatusses, several techniques are currently in use:

Silk screen printing is a discontinuous process, wherein each surface is decorated with individual, investment-intensive equipment, i.e. individual screens for each decoration. Each color needed for the decoration is to be applied and dried separately, rendering the process highly time-consuming and elaborative. Moreover, expensive inks are required if the device is to be used under high dynamic loads, as is the case e.g. for winter sports apparatuses, in order to assure improved resistance to peeling, shearing and shock impact in the device.

The dye sublimation technology is characterized in that especially multi-colored patterns are printed on a carrier, e.g. paper and are subsequently transferred to the protective top surface plastic sheet, e.g. of a ski, discontinuously in a thermal press cycle or continuously in a roll calender. As this process affords application of high temperatures of up to 190°C, expensive top surface materials such as PA11 or PA 12 need to be used in order to resist these temperatures. Moreover, this technique is prone to a relatively high transfer failure rate. Another disadvantage of dye sublimation is that it is not a WYSIWYG technique, i.e. transferred colors may appear different as initially expected.

From the Austrian patent AT 406 340 and the corresponding European Patent EP 936 080 a process for the decoration of skis is known, making use of known digital printing processes such as digital ink jet printing or digital plotting to the backside of the protective sheet. The decoration is applied to the inwards directed side of the protective layer. Digital ink jet printing or plotting is mostly a rather slow process, additionally commonly resulting in horizontal lines within the image, thus hampering the aesthetic appearance of the decoration. A major disadvantage is, in addition, that a binding enhancer needs to be applied in order to achieve sufficient binding of the inks onto the protective layer.

The manufacture of a winter sports apparatus involves several lamination steps of different layers, typically comprising heated press cycles of heating in the range of e.g. up to 90-140°C or even higher, typically for about 5 to 20 minutes at pressures of about 2 to 15 bars; conventional color agents such as e.g. toners or solvent based or aqueous inks would not be stable under these conditions, thus blurring of the decoration would occur. Thus, conventional thermoplastic toners with glass transition temperatures in the range of about 50°C to 80°C and melting temperatures below 120°C, and conventional solvent-based and aqueous ink-jet inks are not preferably suitable for such processes.

It is thus an object of the present invention to overcome the shortcomings of the prior art, especially to provide a process for the decoration of a device with a multi-layered structure, especially a winter sport apparatus, which is cost-saving, easily to implement, which allows for an efficient work-flow in the production of the device and which fulfills the needs of a maximum of delamination-resistance and high resolution of the decoration.

These objects are met by a process of applying a decoration to an especially area-measured device, a semi-finished product for manufacture thereof, a device possessing such decoration and the use of a crosslinkable, especially irradiation-curable substance, preferably a color agent, most preferably an ink-jettable ink, as a bonding-enhancer to an adjacent layer and for the decoration of such a device possessing a multi-layered structure according to the independent claims.

These objects are met inter alia by a process of applying an especially ink-jetted decoration to a device, preferably a sports apparatus, most preferably a winter sports apparatus. The decoration layer such as a text, logo, image or the like is preferably ink-jetted.

The process is characterized in that it comprises the steps of:
- providing
   - an especially white basic layer carrying the decoration; or
   - an especially at least partially transparent protective sheet or running surface carrying the decoration;
   wherein the decoration is configured suchlike to withstand heated press cycles of: temperatures of greater than 120°C, preferably of greater than 140°C, most preferably greater than 160°C; and pressures of more than 2 bar, preferably more than 10 bar, most preferably more than 15 bar;
- attaching the decorated basic layer (3) or protective sheet (4) to the core construction (5) of the device (1); and
- optionally, applying an outer protective sheet and/or a protective-lacquer or -varnish to the basic layer, facing outwards of the device (1), wherein the protective sheet and/or the protective-lacquer or -varnish is at least partially transparent in the area of the decoration.

According to the invention, the glass transition temperature of the especially ink-jetted decoration is preferably increased by chemically crosslinking the decoration to a level at which it will withstand the above-mentioned parameters of temperature and pressure, especially at least for times of about 5 to 20 minutes, remain stable, and does not flow, i.e. to avoid especially blurring of the decoration, visible by the unaided eye.

Upon applying the decoration to a basic layer which is intended to form an inner part of the assembled device, a more flexible material can be chosen for the basic layer in contrast to the prior art, thus facilitating the application of the decoration. However, according to the invention it is also possible and preferred to directly apply the decoration to the inwards-directed side of the at least partially transparent protective sheet. Due to the subsequent crosslinking of the decoration on the protective sheet (which is preferably additionally pretreated before the application of the decoration, e.g. by corona plasma or the like), it was now surprisingly found that a significantly enhanced bonding strength of the ink-jetted decoration towards the protective sheet was achieved in parallel. Thus, the drawback of the prior art, that additionally binding enhancers have to be applied, is overcome.

According to the invention, it is moreover possible to directly apply a decoration to the inwards-directed side of an at least partially transparent running surface of a winter sports apparatus, if so desired.

Especially, if a mutually transparent basic layer is chosen, the decoration may be applied on only one single or even both area-measured sides thereof. The decoration may furthermore be oriented suchlike within the finished device to face either outwards or inwards, when a transparent basic layer is chosen. According to the prior art, the decoration was applied directly onto the inwards directed face of an outer, transparent protective sheet, which is relatively thick and stiff, whereby an efficient work-flow (i.e. separate production, supply and storage of semi-finished products, e.g. decorations) in the production of the device was hampered.

The use of ink-jet technology allows for a larger variety of substrates to be printed on as e.g. compared to laser printing, because the substrate does not need to be temporarily charged for the transfer of the color agent.
Moreover, the disadvantage of conventional ink jet printing or plotting, i.e. being a rather slow process, additionally commonly resulting in horizontal lines within the image (known as "bending lines"), has been overcome by recent developments in ink-jet technology. For example, the *the Dotfactory* digital ink-jet press (Agfa-Dotrix, Ghent, Belgium) works with fixed colorbars covering the whole width of the substrate, one for each color. Thus, this process is rather rapid and does not generate horizontal lines as known from conventional ink-jet printers.

It is especially preferred, that the process according to the invention of applying a decoration to a device, especially a winter sports apparatus possessing a multi-layered surface, involves the steps of:
- applying a layer of at least one crosslinkable substance, preferably an ink-jettable ink to a basic layer, a protective sheet or a running surface;
- crosslinking the at least one substance, especially the ink by appliance of an outer influence.

By using a crosslinkable substance, especially an ink-jettable ink, a remarkably improved resistance against delamination under dynamic load is achieved, both within the decoration and especially at the interface to adjacent layers such as e.g. a reinforcing layer ("Obergurt" or "Untergurt") and an outer surface such as e.g. the protecting sheet or the running surface of a ski or snowboard, which was a major drawback of the prior art. Surprisingly, it has now been found that chemically crosslinked color agents such as e.g. UV-cured ink-jettable inks strikingly enhance the strength of the bonding to both adjacent layers in a ski construction. By crosslinking of the ink, a 3-dimensional framework is established, whereby delamination can be efficiently prohibited. Moreover, irradiation-cured inks, preferably UV-cured inks will not become unstable, will not flow, nor will they cause blurring of the decoration during further manufacturing in e.g. presses under high temperatures, such as commonly applied in the production of a winter sports apparatus such as e.g. ski or snowboard. The formulation of UV- and electron-beam curing ink systems is commonly known in the art (e.g. reviewed in *"The printing ink manual",* 5^{th} Edition 1993; Blueprint (Chapman & Hall); R.H. Leach, R.J. Pierce (Eds.); Chapter 11; included herewith by reference) and may be easily adapted for special purposes by the person of routine skill in the art. Most commonly, an "initiator package" is included in the ink (e.g. benzophenone as initiator and triethanolamine as a synergist), together with prepolymer resins containing activated carbon-carbon double bonds such as e.g. polyurethane acrylate, polyester acrylate and epoxy acrylate.

As used herein, a winter sports apparatus may be any kind of device intended for use on snow and/or ice, e.g. skis, snowboards, etc.; according to the invention, the decoration may be applied either to the top surface or the running surface of the device. The invention is especially useful for devices that are exposed to dynamic loads such as shear load. It is obvious to the person of routine skill in the art to implement the invention also to other sports and/or outdoor devices such as e.g. skate-boards, surf-boards, etc..

As used herein, the term color agent comprises any kind of substances known in the art for coloration and/or decoration of substrates. Preferred color agents are especially ink-jetable inks. In ink-jet technology, the differently colored inks (e.g. CMYK) are routinely ink-jetted only besides each other; halftones of colors are achieved for the unaided eye by arranging dots of the basic colors besides each other which occasionally might coagulate to 'mixed' droplets of ink in case they flow into each other, before being crosslinked. However, for special applications such as e.g. photographic prints, inks with lower pigment content are arranged in up to three layers (e.g. Canon PhotoRealism). In any case, the ink is chemically crosslinked according to the invention, whereby a 3-dimensional framework is obtained.

As used herein, the term crosslinking is used in the sense of chemical crosslinking. Crosslinking may thereby occur via an ionic or, especially preferred, a radical pathway. For crosslinking of the color agents such as the ink-jettable ink, especially any kind of outer influence, especially an irradiation source suitable for initiation of an ionic and/or radical pathway may be used. Preferably, curing and/or crosslinking is effected by means of microwave or radio frequency, infra-red, electron beam or, especially preferred, ultra-violet (UV). Most preferably, curing and/or crosslinking is based on the presence of activated carbon-carbon double bonds such as acrylates, methacrylates, allyl, styrenyl or vinyl. Although crosslinking by means of irradiation is preferred, any other suitable process known in the art of polymerization may be applied for crosslinking of the different color agents. Thus, any kind of initiation may be applied such as e.g. moisture-curing and/or -crosslinking systems and/or heat-curing and/or -crosslinking systems. Moreover, chemically blocked reagents (such as deactivated iso-cyantes or the like; deactivation of isocyanates with e.g. 1° or 2° aliphatic amines, di- or polyamines, hydrazine derivatives, amidines or guanides is known to the person of routine skill in the art) or micro-encapsulated reagents (both to liberate by either moisture, heat, irradiation or the like) may be used.

In a preferred embodiment of the present invention, the irradiation curable color agents, preferably ink-jettable UV-curable inks, are applied by means of a digital printing process, preferably a high resolution digital press, most preferably an ink-jet digital press. Preferred digital ink-jet presses are commercially available, e.g. *TheDotFactory* (Agfa-Dotrix NV, Ghent, Belgium); or the like. A special advantage of *TheDotFactory* is that the printing station covers the whole width of the substrate to be printed on. Thus, the substrate passes the stationary color bars only once, allowing for a high throughput. Due to the fixed colorbars, the horizontal lines commonly occurring in conventional ink-jet appliances are also prevented. Moreover, an in-line, high power corona plasma pretreatment immediately before ink-jetting the indivial colors of ink is performed, which is especially preferred for further enhancement of the bonding between ink and substrate, followed by an in-line UV-curing unit immediately after the SPICE® ink jet unit using preferably mercury-doped and/or iron-doped high power UV-lamps.

Because of the demanding requirements of the ski industry towards dynamic loading and lamination strength, it is a general advantage of ink-jet technology described above and in conjuction with the ink-jettable, UV-curable inks, that it allows for a larger variety of substrates to be printed on as e.g. compared to laser printing, because these substrates do not need to be temporarily charged for the transfer of the color agent as in xerographic technologies. Thus, well-known materials to ski and snowboard manufacturers such as e.g. Duraclear ABS/TPU top surfaces and e.g. P-Tex (UHMW)PE running bases can be easily decorated and can meet the demanding requirements of the industry. Moreover, a variety of materials in principle suitable for the application in terms of impact strength and other important properties could previously not be used as top surfaces in decorated skis, because only insufficient bonding strength could be achieved between these materials and the conventional (silk-screened or dye sublimated or non-crosslinked, ink-jetted decoration. Exemplarily, high-transparency and high-toughness polypropylenes (such as Clyrell 7173XCP, Basell, Hoofddorp, The Netherlands), or pure TPUs such as Elastollan L74D (Elastogran, Lemförde, Germany) could not be used as a top surface material, since bonding of these materials onto a ski or snowboard was technically not possible: delamination occurred under dynamic load at the interface between the decoration and the top surface material, e.g. the protective sheet and/or the running surface. However, according to the invention, it was now surprisingly found that a decoration, consisting of a layer of a chemically crosslinked substance, especially UV-cured inks, work as a bonding enhancer to such materials by in-situ formation of a three dimension chemical network most likely also between these materials and the inks used as decoration. A large variety of surface materials is suitable in combination with the method of decoration described herein, e.g. extrudable COC polymers (Topas®, Ticona, Frankfurt, Germany), polycarbonates (Lexan 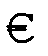 , General Electric Plastics, Bergen op Zoom, The Netherlands) or PC blends, such as PC/PET and others, as well as polyamides such as PA 11, PA 12 (Rilsan®, Atofina Chemicals, Paris-La Défense, France) and amorphous polyamides, such as extrudable Trogamid® grades (Degussa, Marl, Germany).

According to an especially preferred embodiment, the protective layer itself can also be made of a UV-crosslinkable lacquer, e.g. Lumillux 003 and 008 provided by Mäder Lacke (Killwangen, Switzerland). Protective layers may thus be provided as foils of thickness of 0.01 to 0.1 mm, which are excellently compatible with additional decorations according to the invention due to their highly related, e.g. urethane acrylate-based chemistry.

According to an especially preferred embodiment, the basic layer to be attached to the core construction of the device is made from plastic, especially comprising polyethylene terephtalate (PET)(e.g. Melinex 329K, Dupont de Nemours, Wilmington, DE, USA). Most preferably, the basic layer is white in order to aid the appearance of the decoration; especially white basic layers are preferred in order to 'hide' undesired patterns, roughnesses and discolorations of underlying layers. Most preferably, the basic layer is only about 50 - 75 µm thick; after decoration of such a basic layer, a lacquer or varnish is applied directly onto the decoration as a protective sheet, thus reducing the overall weight of the final device.

For both the connection of the protecting sheet or running surface to the especially multi-layered structure and the connection of the especially multi-layered surface to the reinforcing layer ("Obergurt" or "Untergurt") of the device, suitable adhesives known to the person of routine skill in the art are preferably used. These adhesives need to be adapted to the materials to be connected and may be applied as bulk material or film. As an alternative, e.g. surface flame treatment with a Pyrosil® additive (Sura Instruments, Jena, Germany) may be used for attachment of the decorated basic layer to the core construction.

The invention moreover relates to a semi-finished sheet product for manufacturing of a device, preferably a sports apparatus, most preferably a winter sports apparatus, comprising
- a preferably white basic layer carrying an especially ink-jetted decoration layer; or
- an at least partially transparent protective sheet or running surface carrying an especially ink-jetted decoration layer,
wherein the decoration layer (2) is configured suchlike to withstand heated press cycles of:
- temperatures of greater than 120°C, preferably of greater than 140°C, most preferably greater than 160°C; and
- pressures of more than 2 bar, preferably more than 10 bar, most preferably more than 15 bar;
without blurring of the decoration to occur.

Such a semi-finished product is resistant to blurring of the decoration under normal heat press cycles typically applied in e.g. ski and snowboard manufacturing. Morevover, delamination within the decoration layer and/or to adjacent layers, especially a protective layer made of Duraclear 92078, Duraclear 92161 or Duraclear 92204 (IMS Kunststoffe AG, Worb, Switzerland), is avoided, especially under dynamic shear loads commonly occurring in use of e.g. skis or snowboards.

The semi-finished product preferably comprises a basic layer carrying an especially ink-jetted decoration layer, which is chemically crosslinked within itself and at least with the interface of of the substrate material onto which it is applied in the digital press (protective sheet or basic layer). Thuslike, and especially making use of the process according to the invention, personalization of surface decorations is possible without complicated logistics: a laminate comprising the preferably already cured and crosslinked decoration layer on a basic layer or protective layer can be easily provided, shipped and stored e.g. on rolls, thus facilitating the overall course of production and making it more flexible.

A semi-finished product according to the invention may be supplied to the manufacturer of the final device e.g. pre-assembled (e.g. laminated) to the protective top surface layer or running surface. After commonly used heat press cycles of the production line of e.g. ski and snowboard manufacturing, additional protective lacquers or varnishes may be applied.

A device, especially a winter sports apparatus, is preferably made by a process outlined above and/or by using a semi-finished product outlined above, especially a laminated sheet product, comprising an especially ink-jetted decoration layer on a basic layer or, especially preferred a protective sheet or running surface, wherein the decoration layer is crosslinked in itself and with an adjacent layer by means of an outer influence such as irradiation, heat or moisture, especially UV-irradiation.

The invention will now be described by means of figures and examples in more detail, without the invention being limited to these preferred embodiments.
- Fig. 1:: partial side-view of a multi-layered device according to the invention; decoration applied on a basic layer;
- Fig. 2:: partial side-view of a multi-layered device according to the invention; decoration applied on the inwards-directed side of the protective sheet.

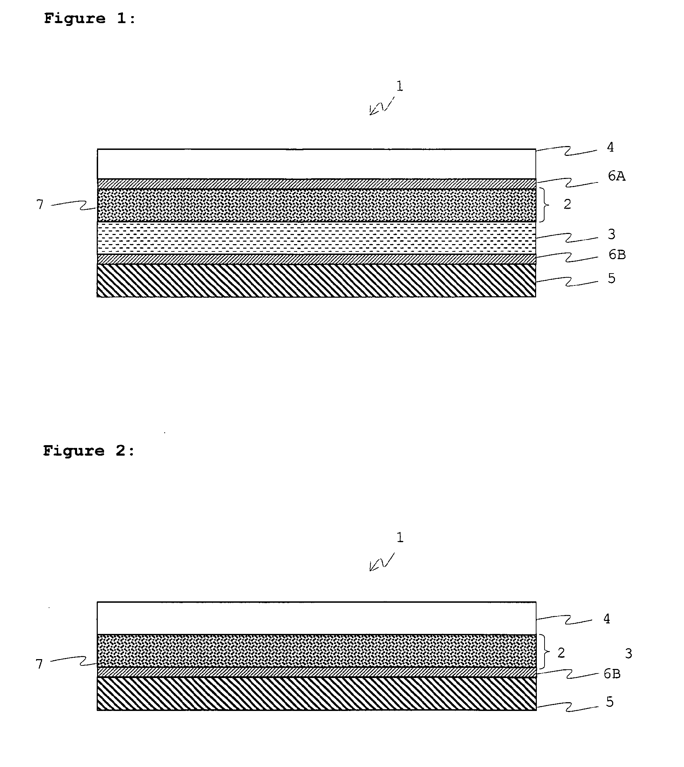

As shown schematically in Figure 1, a device 1, especially a winter sports apparatus, possessing a multi-layered structure is built up on a core construction 5. In case of the device 1 being a ski, snowboard or the like, the core construction 5 is mostly made from epoxy resin such as 100 parts by weight of Araldite 136N with e.g. 35 parts by weight of Araldite HY 991 (Vantico, Huntsman, Eversberg, Belgium). The device 1 comprises a decoration made up from at least one layer of an irradiation curable substance 7 contained in a decoration layer 2, which is applied to a basic layer 3, preferably by means of a digital printing process such as ink-jet printing. Irradiation, here UV-curing and crosslinkable inks are commonly available e.g. ProJet T1A from Avecia Ink Jet Printing Materials (Blackley, Manchester, England). The necessary amount of the crosslinkable component to be added to the color agent in order to achieve a sufficient increase of the glass transition temperature Tg of the decoration is easily to determine by routine experiments of the person of routine skill in the art. Target is to ensure a vitrificated stage of the crosslinked ink under conditions used in the ski or snowboard press. The basic layer 3 is e.g. Melinex 329W (Dupont de Nemours, Wilmington, DE, USA) However, the protective layer may, instead of a thermoplastic, also be a UV-crosslinked lacquer, made of or essentially comprise a crosslinked substance, especially made of or essentially comprising a crosslinked ink, such as Lumillux 003, made by Mäder Lacke (Killwangen, Switzerland). According to the invention, especially irradiation curable and crosslinkable inks in a decoration layer 2 are used for the decoration, whereby a strikingly enhanced bonding especially to the protective sheet and/or the basic layer, as well as to a standard (UHMw)PE running base material is achieved. A semi-finished laminated sheet product comprising the basic layer 3 and the decoration layer 2 may be produced, stored and supplied (e.g. on rolls) separately from the production of device 1, thus facilitating logistic needs significantly. Such a semi-finished laminated sheet is to be connected to the protecting sheet 4, e.g. by means of a suitable adhesive 6A, e.g. a polyurethane-based, thermoplastic adhesive film such as e.g. Puro L (Collano Xiro AG, Schweiz). Thermosetting adhesives, such as one-component urethane based systems or suitable epoxy resin systems, can also be utilized to achieve this. As a protecting sheet 4, Duraclear (IMS Kunststoff AG, Worb, Switzerland) was chosen with a thickness in the range of about 0.2 mm to about 1mm, preferably in the range of about 0.6 mm. Moreover, an appropriate adhesive 6B may also be chosen for the connection of the basic layer 3 to the core construction 5; in this embodiment, Puro L (Collano Xiro AG, Schmitten, Switzerland) was chosen, too. The choice of suitable adhesives for any mentioned connection, however, is within the routine knowledge of the person skilled in the art; especially, hot melt adhesives, preferably based on co-polyester resins, such as XAF 37.204 and XAF 37.304 (Collano Xiro AG, Schmitten, Switzerland) may also be used. Whether additional layers or not need to be integrated in addition to the adhesives 6A, 6B in order to achieve a suffiently delamination-resistent laminate, can be easily investigated by routine experiments. However, especially for the connection of the basic layer 3 to the core construction 5, a flame treatment of the PET basic layer with Pyrosil® flame additives as provided by Sura Instruments (Jena, Germany) may be used in order to improve the bonding strength of the adhesive system onto the PET film.

Fig. 2 schematically shows a further, especially preferred embodiment according to the invention. The decoration layer 2 may be directly applied on the inwards-directed face of the protective layer 4, preferably ink-jetted after corona plasma pre-treatment, and finally UV-curing of the ink-jetted decoration. Thuslike, a semi-finished product comprising the protective layer 4 and the decoration layer 2 is achieved, without the need of any further binding enhancer in between. This semi-finished product can be fixed to the core construction 5 of a ski e.g. by means of an adhesive 6B, e.g. an epoxy resin. Commonly, the connection of the core construction (e.g. made from wood or foamed plastics with fibre reinforced layers on each side ("Obergurt" and "Untergurt") is rather stable and thus not the critical interface. Thuslike, the much more critical interface between the decoration and especially unusual protective layers such as e.g. high-transparency and high-toughness PP-copolymers and highly scratch resistant pure TPU polymers or the like is overcome without the need of any further layers of binding enhancer(s).

It is to be understood, that according to the invention the decoration may also be directly applied by a method as outlined above to the inwards-directed surface of an at least partially transparent running surface of e.g. a ski, if so desired.

### Comparative Embodiment 1:

This embodiment shows the enhanced bonding of decorations to e.g. a TPU sheet as a top surface by a decoration layer according to the invention:

A decoration according to the invention was directly printed on the envisaged backside of an extruded foil of 100% Elastollan L74D (Elastogran GmbH, Lemförde, Germany) of 0.6 mm of thickness. The *TheDotFactory* (Agfa-Dotrix; Agfa-Gevaert) technology as outlined above (digital press and therewith supplied inks) was used for printing of the decoration.

As an epoxy resin, Vantico AW1137 epoxy resin (Huntsman/Vantico, Eversberg, Belgium; 100 parts by weight), supplied with HY5049 hardener (Huntsman/Vantico, Eversberg, Belgium; 30 parts by weight) was used.

The laminate was built up on a roughened aluminium plate (Article 93008508, anodised Titanal Aluminium, supplied by Amag Rolling, Ranshofen, Austria), simulating the core of the ski.

The following constructions were laminated in a lamination press at 130°C during 15 minutes at a pressure of 6 bars (whereby flowing of the TPU was prevented by a steel frame):
a) Alu / epoxy resin / ink-jetted decoration on TPU-sheet;
b) Alu / epoxy resin / non-decorated TPU-sheet.

Both laminates were subsequently analyzed for the strength of the laminate by means of the drum peeling test according to DIN 53 295. Test results were as follows:
a) peel strength of 8.5 to 11 N/mm of width;
b) peel strength of less than 2 N/mm of width.
Obviously, the layer of a crosslinked substance, here the decoration layer of an ink-jetted ink, strikingly enhances the achievable bonding strength to the TPU protective layer, which conventionally was the weak spot in the overall laminate.

### Comparative Embodiment 2:

This embodiment further underlines the enhanced bonding strength of crosslinked, e.g UV-cured, ink-jetted decoration layers, compared to conventionally applied ink-jet decorations. All decorations were printed onto Duraclear 92078 (IMS). Aluminium plates and epoxy resin were used analogous to Comparative Embodiment 1; lamination and the drum peeling test was also performed analogous to Comparative Embodiment 1. The following decorated laminates were tested:
1.A: A decoration was printed on the inwards-directed side of the Duraclear 92078 (protective sheet) substrate by means of a conventional ink-jet plotter (with Galaxy JA 256/30 LQ printing heads (Spectra Inc.) and using Sunjet Crystal SOV ink (SunChemical).
   The drum peeling test of the resulting laminate resulted in a value of less than 1N/mm, which is not acceptable especially for ski decoration purposes.
1.B: A decoration was printed on the Duraclear 92078 substrate by means of a Roland Soljet Pro II plotter, model SJ-540 (Plotdesign (Agent of Roland DG), Hedel, Netherlands). The solvent-based CMYK inks PDS (Plotdesign (Agent of Roland DG), Hedel, Netherlands) were used for printing.
   The drum peeling test of the resulting laminate resulted in a value of less than 1 N/mm, which is not acceptable especially for ski decoration purposes.
2. A decoration was printed onto the Duraclear 92078 substrate of 0.45mm thickness by means of the *TheDotFactory* technology as outlined above (Agfa-Dotrix), including plasma pre-treatment of the substrate. UV-curable ink Avecia ProJet T1A (Avecia, Manchester, UK) was used for printing of the decoration.
   The drum peeling test of the resulting laminate resulted in a value of about 3 to 4 N/mm, which is acceptable especially for ski decoration purposes.
3. A decoration was printed onto the Duraclear 92078 substrate by means of the *TheDotFactory* as outlined above (Agfa-Dotrix), including plasma pre-treatment of the substrate, and using therewith supplied UV-curing inks (Agfa-Gevaert, Mortsel, Belgium).
   The drum peeling test of the resulting laminate resulted in a value of about 4 to 5 N/mm, which is acceptable especially for ski decoration purposes.

Apparently, the strength of the bonding within the laminate is strikingly enhanced (examples 2 and 3) especially by using UV-crosslinked inks as a decoration layer, directly applied to a protective sheet e.g. made from Duraclear 92078: Without the need of any further layer of binding enhancers, the strength of the resulting laminate easily meets the of the ski industry.

## Claims

1. Semi-finished sheet product for manufacturing of a device (1), preferably a sports apparatus, most preferably a winter sports apparatus, comprising
• a preferably white basic layer (3) carrying an especially ink-jetted decoration layer (2); and/or
• a preferably at least partially transparent protective sheet (4) carrying an especially ink-jetted decoration layer (2); and/or
• a preferably at least partially transparent running surface carrying an especially ink-jetted decoration layer (2),
wherein the layer (2) is configured suchlike to withstand heated press cycles of:
• temperatures of greater than 120°C, preferably of greater than 140°C, most preferably greater than 160°C; and
• pressures of more than 2 bar, preferably more than 10 bar, most preferably more than 15 bar,
without blurring of the decoration to occur.

2. Semi-finished product according to claim 1, wherein the glass transition temperature of the composition of the decoration is higher than about 120°C, preferably higher than 130°C, most preferably higher than 140°C.

3. Semi-finished sheet product, especially according to one of claims 1 to 2, carrying a decoration, wherein the especially ink-jetted decoration layer (2) is chemically crosslinked within itself and/or with an adjacent basic layer (3), protective sheet (4) running surface.

4. Semi-finished product according to one of claims 1 to 3, obtainable by a process involving the steps of:
• applying a decoration layer (2) of at least one crosslinkable substance, especially an ink to a substrate, especially a basic layer (3), a protective sheet (4) or a running surface;
• crosslinking the at least one crosslinkable substance, especially the one ink by appliance of an outer influence.

5. Semi-finished product according to claim 4, wherein the at least one ink is crosslinked by a process involving heat, moisture or irradiation such as UV-, microwave-, infra-red- or electron-beam-irradiation.

6. Semi-finished product according to one of claims 3 to 5,
wherein the decoration layer (2) is obtainable by means of a digital printing process, preferably a high resolution digital press, most preferably an ink-jet digital press.

7. Semi-finished product according to one of claims 1 to 6,
wherein the basic layer (3) is pre-treated for enhancement of the bonding of the ink(s).

8. Semi-finished product according to one of claims 1 to 7,
wherein the basic layer (3) is made from plastic, most preferably comprising polyethylene terephtalate.

9. Semi-finished product according to one of claims 1 to 8,
wherein a protective sheet (4) or running surface is applied to the basic layer (3) carrying the decoration by means of an adhesive and/or a core construction (5) is applied to the protective sheet (4), inwardly carrying the decoration, by means of an adhesive.

10. Semi-finished product according to claim 9, wherein the adhesive is made from or comprises an epoxy resin.

11. Process of applying an especially ink-jetted decoration to a device (1), preferably a sports apparatus, most preferably a winter sports apparatus, comprising the steps of:
• providing
- an especially white basic layer (3) carrying the decoration, preferably a semi-finished product according to one of claims 1 to 11; and/or
- an especially at least partially transparent protective sheet (4) or running surface, carrying the decoration, preferably a semi-finished product according to one of claims 1 to 10,
wherein the decoration is configured suchlike to withstand heated press cycles of: temperatures of greater than 120°C, preferably of greater than 140°C, most preferably greater than 160°C; and pressures of more than 2 bar, preferably more than 10 bar, most preferably more than 15 bar;
• attaching the decorated basic layer (3) and/or protective sheet (4) and/or running surface to the core construction (5) of the device (1); and
• optionally, applying an outer protective sheet and/or a protective-lacquer or -varnish to the basic layer, facing outwards of the device (1), wherein the protective sheet and/or the protective-lacquer or -varnish is at least partially transparent in the area of the decoration.

12. Device (1), especially a winter sports apparatus possessing a multi-layered structure, comprising an especially ink-jetted decoration layer (2) on a basic layer, protective sheet (4) or running surface, wherein the decoration, especially the ink(s) are chemically crosslinked.

13. Device (1) according to claim 12, wherein the basic layer (3) is made from plastic, most preferably comprising polyethylene terephtalate (PET).

14. Use of at least one chemically crosslinkable substance in a multi-layered structure as a bonding enhancing layer to at least one adjacent layer, most preferably in the decoration of a device (1), especially a winter sports apparatus.

15. Use according to claim 14, wherein the chemically crosslinkable substance is contained in a color agent, preferably an ink-jettable ink.

16. Use according to claim 15, wherein the at least one crosslinkable color agent enhances the bonding onto the protective layer and/or the running base material.
